# EUROPEAN PATENT APPLICATION

(11) **EP 4 685 670 A1**
(43) Date of publication of application: **28.01.2026**
(21) Application number: 24774151.5
(22) Date of filing: 20.03.2024
(51) Int. Cl.: G06F 16/9532

(54) **INFORMATION QUERY METHOD AND APPARATUS, AND ELECTRONIC DEVICE**

(30) Priority: 22.03.2023 CN 202310287308
(71) Applicant: Beijing Zitiao Network Technology Co., Ltd., Beijing 100190 (CN)
(72) Inventor: CUI, Guoxing, Beijing 100028 (CN); ZHOU, Ziqing, Beijing 100028 (CN); WANG, Lu, Beijing 100028 (CN); JIANG, Zhendong, Beijing 100028 (CN); LI, Bo, Beijing 100028 (CN)
(74) Representative: Grünecker Patent- und Rechtsanwälte PartG mbB
(86) International application number: PCT/CN2024/082729
(87) International publication number: WO 2024/193586

(57) **Abstract**

The disclosure provides a method, apparatus and electronic device for information query. A specific implementation of the method includes: determining a first information set having an association relationship with a first session in response to an information query request triggered by a first user in the first session, wherein the first user is a session member of the first session, and the first information set includes information outside the first session; obtaining a query result from the first information set according to the information query request; and displaying the query result in the first session. This implementation narrows a data query range, increases data query efficiency and further improves user experience.

## Description

This application claims priority to Chinese Patent Application No. 202310287308.8, filed on March 22, 2023 and entitled "METHOD, APPARATUS AND ELECTRONIC DEVICE FOR INFORMATION QUERY", the disclosure of which is incorporated herein by reference in its entirety.

### FIELD

The present disclosure relates to the field of computer technology, and in particular, to a method, apparatus and electronic device for information query.

### BACKGROUND

With the continuous development of terminal technology and network technology, instant messaging tools are increasingly used in people's life and work, and people can communicate with friends or group members in a session of the instant messaging tools. Currently, if a member in a session needs to query and share data, a data table to be queried may be generally shared in the session, and a user may open the data table to perform data query. However, if the number and content of data tables to be shared are too large, inconvenience will be brought to the data query. Therefore, there is currently a need for a more efficient and convenient method for information query.

### SUMMARY

The present disclosure provides a method, apparatus and electronic device for information query.

According to a first aspect, a method of information query is provided, including:
determining a first information set having an association relationship with a first session in response to an information query request triggered by a first user in the first session, wherein the first user is a session member of the first session, and the first information set includes information outside the first session;
obtaining a query result from the first information set according to the information query request; and
displaying the query result in the first session.

According to a second aspect, a method of information query is provided, including:
receiving a first query request from a first query interface, the first query interface being associated with a first online data table;
determining a first query range in the first online data table based on the first query request, the first query range being different from or identical to a second query range, the second query range being a visible range of the first online data table to a user sending the first query request; and
obtaining a query result from the first query range, and outputting the query result to the first query interface.

According to a third aspect, an apparatus for information query is provided, including:
a determining module configured to determine a first information set having an association relationship with a first session in response to an information query request triggered by a first user in the first session, wherein
the first user is a session member of the first session, and the first information set includes information outside the first session;
an obtaining module configured to obtain a query result from the first information set according to the information query request; and
a display module configured to display the query result in the first session.

According to a fourth aspect, an apparatus for information query is provided, including:
a receiving module configured to receive a first query request from a first query interface, the first query interface being associated with a first online data table;
a determining module configured to determine a first query range in the first online data table based on the first query request, the first query range being different from or identical to a second query range, the second query range being a visible range of the first online data table to a user sending the first query request; and
an output module configured to obtain a query result from the first query range, and output the query result to the first query interface.

According to a fifth aspect, a computer readable storage medium is provided, wherein the storage medium stores a computer program which, when executed by a processor, implements the method according to the first aspect or the second aspect.

According to a sixth aspect, an electronic device is provided, including a memory, a processor and a computer program stored on the memory and operable on the processor, wherein the processor, when executing the program, implements the method according to the first aspect or the second aspect.

It is to be understood that both the foregoing general description and the following detailed description are example and explanatory only and are not restrictive of the disclosure.

### BRIEF DESCRIPTION OF THE DRAWINGS

To illustrate the technical solutions of the embodiments in this specification more clearly, a brief introduction is presented below to the accompanying drawings required for describing the embodiments. Apparently, the accompanying drawings in the following description are merely some of the embodiments disclosed in this specification, and those of ordinary skill in the art may further derive other drawings from these accompanying drawings without creative efforts.
FIG. 1 is a schematic diagram of an example system architecture in which embodiments of the present disclosure may be applied;
FIG. 2 is a flowchart of a method of information query according to an example embodiment of the present disclosure;
FIG. 3 is a schematic diagram of an online data table according to an example embodiment of the present disclosure;
FIG. 4 is a flowchart of another method of information inquiry according to an example embodiment of the present disclosure;
FIG. 5 is a block diagram of an apparatus for information query according to an example embodiment of the present disclosure;
FIG. 6 is a block diagram of another apparatus for information query according to an example embodiment of the present disclosure;
FIG. 7 is a schematic block diagram of an electronic device according to some embodiments of the present invention;
FIG. 8 is a schematic block diagram of another electronic device according to some embodiments of the present invention; and
FIG. 9 is a schematic diagram of a storage medium according to some embodiments of the present disclosure.

### DETAILED DESCRIPTION

In order to make those skilled in the art better understand the technical solutions in this specification, the technical solutions in the embodiments will be clearly and completely described with reference to the accompanying drawings in the embodiments of this specification. Apparently, the embodiments to be described are merely a part rather than all of the embodiments of this specification. All other embodiments obtained by those of ordinary skill in the art based on the embodiments in this specification without creative efforts shall belong to the scope of protection of this specification.

Where the following description relates to the accompanying drawings, unless otherwise indicated, the same numbers in different drawings represent the same or similar elements. The implementations described in the following example embodiments do not represent all implementations consistent with the present disclosure. Rather, they are merely examples of apparatus and methods consistent with some aspects of the present disclosure, as detailed in the appended claims.

The terminology used in this disclosure is for the purpose of describing particular embodiments only and is not intended to limit the disclosure. As used herein, the singular forms "a", "said" and "the" are intended to include the plural forms as well, unless the context clearly indicates otherwise. It should also be understood that the term "and/or" as used herein refers to and encompasses any or all possible combinations of one or more associated listed items.

It should be understood that although the terms first, second, third, etc. may be used in this disclosure to describe various information, such information should not be limited by these terms. These terms are only used to distinguish the same type of information from each other. For example, the first information may also be referred to as the second information, and similarly, the second information may also be referred to as the first information, without departing from the scope of the present disclosure. The word "if" as used herein may be construed as "at the time of" or "when" or "in response to determining, " depending on the context.

The technical solutions provided by the embodiments of the present disclosure may have the following beneficial effects:
The embodiments of the present disclosure provide a method and apparatus for information query, are an information query method and apparatus. Through an information query request triggered by a first user in a first session, a first information set having an association relationship with the first session is determined; a query result is obtained from the first information set according to the information query request, and the query result is displayed in the first session. In this way, partial alternative data may be excluded according to the session, thereby narrowing a data query range, increasing data query efficiency and further improving user experience.

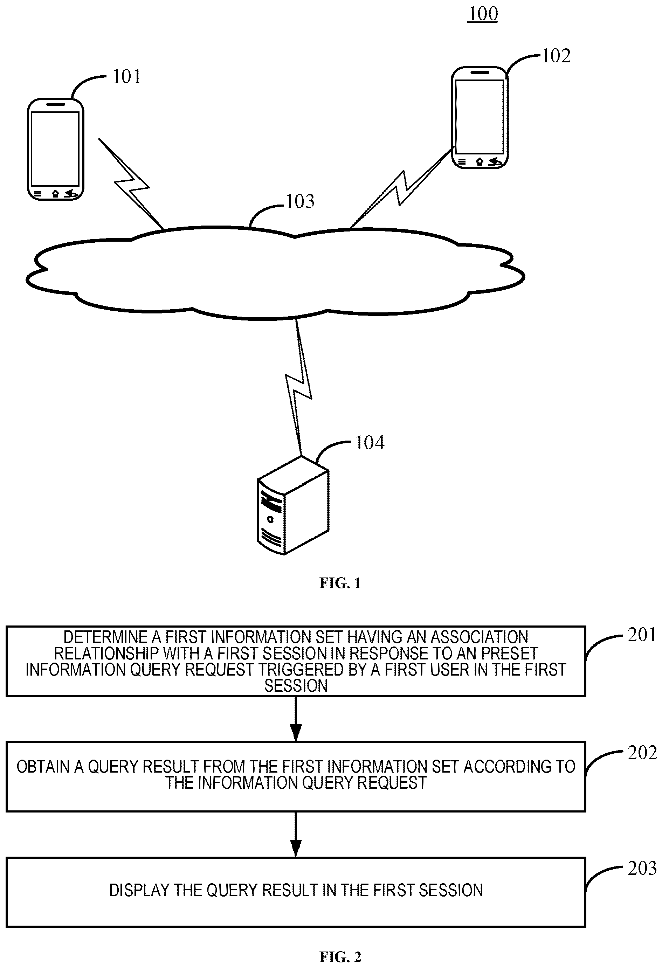

FIG. 1 is a schematic diagram of an example system architecture in which the embodiments of the present disclosure may be applied.

As shown in FIG. 1, the system architecture 100 may include terminal devices 101, 102, a network 103, and a server 104. It should be understood that the number or types of terminal devices, networks, and servers in FIG. 1 are merely illustrative. There may exist any number or type of terminal devices, networks, and servers, depending on implementation needs.

The network 103 is configured to provide a medium of communication link between the terminal device and the server. The network 103 may include various connection types, such as a wired, wireless communication link, or a fiber optic cable.

The terminal devices 101 and 102 may interact with the server through the network 103 to receive or send a request or information. The terminal devices 101 and 102 may be various electronic devices, including but not limited to a smartphone, a tablet computer, an intelligent wearable device, a personal digital assistant, and the like.

The server 104 may perform processing such as storage and analysis on the received data, and may also send a control command or request to the terminal device or other servers. The server may provide a service in response to a service request of a user. It is understandable that one server may provide one or more services, and the same service may also be provided by a plurality of servers.

Based on the system architecture shown in FIG. 1, in the embodiments of the present disclosure, after the user triggers a preset information query request in a session, the terminal device 101 or 102 may send a preset information query request to the server 104 via the network 103. After receiving the preset information query request, the server 104 may determine an information set having an association relationship with the session, obtain a query result from the information set according to the preset information query request, and return the query result to the terminal device 101 or 102, so that the terminal device 101 or 102 displays the query result in the session.

The present disclosure will be described below in detail with reference to specific embodiments.

FIG. 2 is a flowchart of a method of information query according to an example embodiment. An execution body of the method may be implemented as any terminal device, platform, server, or device cluster with computing and processing capabilities. The method includes the following steps:
As shown in FIG. 2, at Step 201, in response to a preset information query request triggered by a first user in a first session, a first information set having an association with the first session is determined.

In this embodiment, the first session may be a window for transmitting messages between users in an instant messaging client, the first session may be a direct-chat session between two users, or may be a group session between a plurality of users, and after logging in to the instant messaging client, the user may send a message to a friend/group member in the first session. The first user is a session member of the first session, and the first user may be an administrator of the first session, may also be a member specified by the administrator of the first session, and may also be any ordinary member of the first session. It may be understood that this embodiment does not limit the specific identity of the first user in the first session.

In an implementation, the preset information query request triggered by the first user in the first session may be a session message which is sent by the first user in the first session and which includes a preset character, and the session message may further include information such as a keyword for querying. For example, the preset character may include a character referring to a first application program, and the session message may be the characters referring to the first application followed by information such as keywords for the query. The first application program may be, for example, a chat robot and other application program.

In another implementation, the preset information query request triggered by the first user in the first session may also be an information query request input in a page associated with a preset control triggered in the first session. For example, the preset control may be a control for querying information in a session, and the first user may trigger the preset control in the first session, so that the instant messaging client outputs a page associated with the preset control. The first user may input the information query request including the keyword in the page associated with the preset control.

In the present embodiment, the data query may be managed by an instant messaging server corresponding to the instant messaging client, and may also be managed by other servers interfacing with the instant messaging server. In a server for managing a data query, at least one information set is stored (for example, the information set may be an online data table), and each information set corresponds to a corresponding object (for example, each online data table may correspond to an application program such as a chat robot, or may correspond to a preset control). A target information set is an information set bound to a corresponding object (for example, a chat robot added in the first session) corresponding to the first session, the target information set includes a first information set (for example, the first information set may be at least part of sub-tables in an online data table, or may be information in part of rows or columns of at least part of sub-tables in a first online data table), and the first information set has an association relationship with the first session.

It should be noted that the first information set includes information outside the first session. That is, in the present disclosure, querying the first information set is different from querying a message in the session, and the information outside the first session may include a non-session message. The information outside the first session may include, for example, but is not limited to, some service data required to be queried by session members of the first session in daily work, and the service data is stored in a system other than a communication system where the session is located.

In some embodiments of the present disclosure, the target information set may further include a second information set, wherein the first information set is different from or partially identical to the second information set, the second information set corresponds to a second session, and the second session is different from the first session. For example, the second set of information may be a sub-table different from the first information set in an online data table. The second information set may include, but is not limited to, a certain type of service data for session members of the second session to query.

In some embodiments, the target information set may further include configuration information, and the configuration information may include a correspondence between different sessions and different information sets in the target information set. For example, session A is associated with information set a, session B is associated with information set b, and session C is associated with information set c. In this case, it may be recorded in the configuration information included in the target information set that session A has a correspondence with information set a, session B has a correspondence with information set b, and session C has a correspondence with information set c, and all the information sets a, b and c are information sets in the target information set. The configuration information may further include one or more of: configuration information about whether the query result corresponding to the session may be forwarded, and configuration information about the visible range of the query result corresponding to the session.

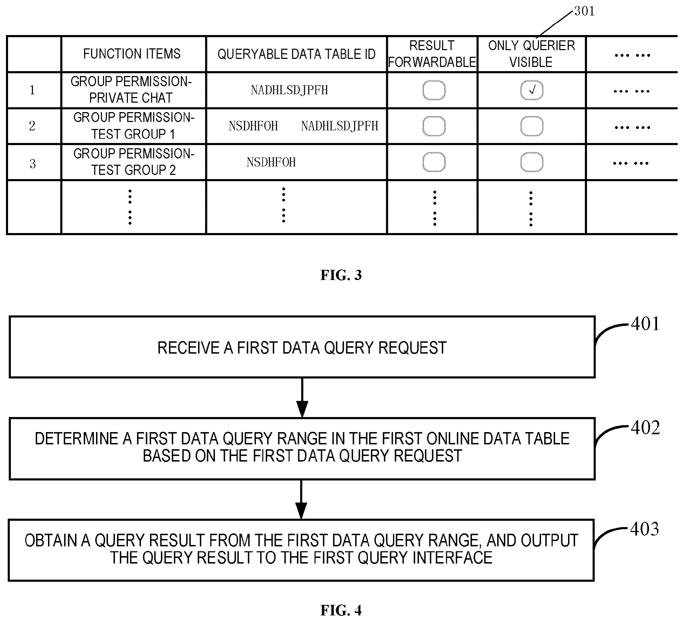

As shown in FIG. 3, a table 301 may be a sub-table in an online data table, wherein configuration information corresponding to different sessions is recorded in the sub-table, a first row of the sub-table is a field name included in the sub-table, and a second row and below are configuration records corresponding to different sessions. A data query permission of any session may be set through a configuration record corresponding to the session. For example, a sub-table which may be queried in the session (i.e., a correspondence between the session and the sub-table) may be set through a field value of a field with a field name "Query-able Data Table ID". Whether the query result may be forwarded to other session may be set through a field value of a field with a field name "Result Forwardable". The visible range of the query result may be set through a field value of a field with a field name "Only Query Visible", etc.

In some embodiments, if the information set for storing data to be queried is an online data table, a preset permission may be enabled for the online data table in advance, and in a case in which the online data table does not enable the preset permission, only a query permission of a part of sub-tables in the online data table is set for the session. For example, session D has a query permission to sub-table d in the online data table, and session members of session D all have query permissions to sub-table d through session D. Where the preset permission is enabled in the online data table, a query permission for part of sub-tables in the online data table by the user and the session may be set. That is, for a sub-table, when both a session and a member of the session have a query permission of the sub-table, the member of the session may query the sub-table through the session. When only the session has the query permission of the sub-table, or only the members of the session have the query permission of the sub-table, the members of the session cannot query the sub-table through the session. For example, session D has a query permission to sub-table d in the online data table, while session E does not have a query permission to sub-table d, and meanwhile, session member L belonging to both the session D and the session E has the query permission to the sub-table d, and session member K belonging to the session D does not have the query permission to the sub-table d. In this case, the session member L may query the sub-table d through the session D, whereas the session member L cannot query the sub-table d through the session E, and the session member K cannot query the sub-table d through the session D either.

Therefore, after the first online data table associated with the preset information query request is determined, it may be first determined whether the first online data table enables the preset permission. If the preset permission is enabled, a target identifier may be obtained first, wherein the target identifier may include an identifier of the first user of the preset information query request triggered in the first session and an identifier of the first session. Then, a sub-table corresponding to the target identifier may be searched from the first online data table based on the target identifier to serve as the first information set. If the preset permission is not enabled, permission configuration information of the first session is obtained, and based on the permission configuration information, a sub-table corresponding to the first session in the first online data table is determined as the first information set.

At Step 202, a query result is obtained from the first information set according to the information query request, and at Step 203, the query result is displayed in the first session.

In this embodiment, the information query request may include, for example, a keyword for querying. A query result may be obtained from the first information set based on the keyword, and the query result is displayed in the first session. In a implementation, the query result may be presented to all session members of the first session. In another implementation, the query result may also be presented to some session members of the first session, wherein some session members include the first user of the preset information query request triggered in the first session and at least one other user. In a another implementation, the query result may also be presented only to the first user of the preset information query request triggered in the first session.

With the method of information query provided by the present disclosure, a first information set having an association relationship with a first session is determined through an information query request triggered by a first user in the first session, a query request is obtained from the first information set according to the information query request, and the query result is displayed in the first session. In this way, partial alternative data may be excluded according to a session, thereby narrowing a data query range, increasing data query efficiency and also improving user experience. For example, in a scenario where an instant messaging session group is mainly used for coordinated communication, a specific group is usually used as a communication working group of a specific service. For example, a group A is used as a communication coordination group for selling a product B, and then a data record set X related to the product B may be associated with the group A, so that members in the group A may conveniently query information in the data record X in the group A.

FIG. 4 is a flowchart of another method of information query according to an example embodiment. An execution body of the method may be implemented as any terminal device, platform, server, or device cluster with calculation and processing capabilities. The method includes the following steps:
As shown in FIG. 4, at step 401, a first data query request is received, wherein the first query request is from a first query interface, and the first query interface is associated with a first online data table. At step 402, first data query range in the first online table is determined based on the first query request.

In an implementation, the first query interface may be located in a first session, and the first query request includes a session identifier of the first session. Determining the first query range in the first online data table based on the first query request includes: determining the first query range based on content in a configuration sub-table in the first online data table, wherein the configuration sub-table stores a correspondence relationship between a session identifier and a query range.

For example, the first query interface may be, for example, a first chat robot, the first chat robot being added as a session member of the first session, the first chat robot being associated with the first online data table, and data to be queried being stored in the first online data table. The first query request may be a request sent by a user in the first session by referring to a message of the first chat robot, and the first query request may include a session identifier of the first session, a keyword for querying, and the like. Specifically, a correspondence relationship between the session identifier and the data query range is stored in the configuration sub-table in the first online data table. Therefore, the first data query range may be determined according to the content of the configuration sub-table in the first online data table and the session identifier of the first session included in the first query request. That is, the data query range corresponding to the session identifier of the first session is searched for from the content of the configuration sub-table as the first data query range.

In another implementation, the first query interface is located in a first page, and the first query request includes a user identifier of a user inputting the first query request in the first page; and the determining the first query range in the first online data table based on the first query request includes: determining the first query range according to content in a configuration sub-table in the first online data table, wherein the configuration sub-table stores a correspondence relationship between a user identifier and a query range.

For example, the first page may be a page for querying data, and the first query interface may be a link or a control in the first page. The first query request may be a request input by a user through the first query interface, and the first query request may include a user identifier of the user inputting the first query request in the first page. Specifically, a correspondence relationship between the user identifier and the data query range is stored in the configuration sub-table in the first online data table. Therefore, the first data query range may be determined according to the content of the configuration sub-table in the first online data table and the user identifier included in the first query request. That is, the data query range corresponding to the user identifier is searched for from the content of the configuration sub-table as the first data query range.

It should be noted that the first data query range may be different from or identical to a second query range, and the second query range is a range of the first online data table which is visible to the user sending the first query request, that is, the second query range refers to a data query range determined based on permissions of the table itself to the user. The first data query range is a data query range configured to satisfy a data query requirement under a specific service scenario. For example, a user A originally has query permissions (i.e., a second query range) to all sub-tables a, b and c in an online data table B. However, in a specific service working scenario, the user A only needs to query the data in the sub-table a. In this case, with the foregoing solution of the present disclosure, a query interface may be configured for the user A, and only data (a first query range) in the sub-table a may be searched for through the query interface. Thus, the efficiency of data query is improved.

At Step 403, a query result is obtained from the first data query range and output to the first query interface.

In this embodiment, the query result may be obtained from the first data query range based on a keyword carried in the first query request, and output to the first query interface.

In this embodiment, a first query range in a first online table is determined through a first query request from a first query interface, a query result is obtained from the first query range and is output to the first query interface. Thus, some alternative data may be excluded according to needs, the data query range is reduced, the data query efficiency is increased, and the user experience is further improved.

It should be noted that although the operations of the methods of the embodiments of the present disclosure have been described in a particular order, this does not require or imply that these operations must be performed in that particular order or that all illustrated operations must be performed in order to achieve the desired results. On the contrary, the steps depicted in the flowcharts may change the order of execution. Additionally or alternatively, certain steps may be omitted, a plurality of steps may be combined into one step, and/or one step may be split into a plurality of steps.

The solution of the present disclosure will be schematically illustrated below in conjunction with a complete specific application instance.

An application scenario may be a process in which a user X queries data through a group session G, wherein the user X is a session member of the group session G, and session members of the group session G may further include a user Y, and the like.

Specifically, first, the user Y may add a chat robot R as a session member of the group session G. After adding the chat robot R as a session member of the group session G, the server may create a configuration record for the group G in an online data table r bound to the chat robot R. One or more sub-tables associated with the group session G in the online data table r may be set in the configuration record, and a member of the group session G may query the one or more sub-tables through the group session G, for example, a sub-table g may be set as a sub-table associated with the group session G. The sub-table g stores, for example, product sales data for the last quarter, and the product sales data may include information such as a product category, a product name, the volume of sales, and a sales price.

The user X may then query the sub-table g through the group session G, or query data from the sub-table g. For example, if the user X wants to query the sales situation of popular science books in the last quarter, then a message referring to the chat robot R may be sent in the group session G, and the message may specifically be "@chat robot R popular science books". The terminal device may transmit an information query request to the server according to the message, wherein the information query request may include, but is not limited to, an identifier of the chat robot R, an identifier of the user X, and an identifier of the group session G.

The server may find the online data table r bound to the chat robot R according to the identifier of the group session G, find the configuration record created for the group session G in the online data table r according to the identifier of the group session G, and determine according to the configuration record that the sub-table g in the online data table r is associated with the group session G. In one case (for example, in a case that the online data table r does not enable an advanced permission), according to a query keyword "popular science book", data related to the keyword may be directly obtained from the sub-table g as a query result, or data of some fields in the data related to the keyword is used as a query result, and the query result is returned to the terminal device.

In another case (for example, in a case that the online data table r enables an advanced permission), it may be further determined according to the identifier of the user X whether the user X has a permission to query the sub-table g. If yes, then according to the query keyword "popular science book", data related to the keyword is obtained from the sub-table g as a query result. Alternatively, data of some fields of the data related to the keyword may be used as the query result, and the query result may be returned to the terminal device. After receiving the query result, the terminal device may send a session message including the query result in the group session G through the chat robot R.

It should be noted that the user X is also a member of the group session T, a sub-table in the online data table r associated with the group session T is a sub-table t, and the user X may query the sub-table t or query data from the sub-table t via the group session T, whereas the user X cannot query the sub-table g or query data from the sub-table g via the group session T.

Any session member of the group session G may remove the chat robot R from the session, and after the chat robot R is removed from the session, the association relationship between the sub-table g and the group session G may be released. For example, the configuration record created for the group session G in the online data table r may be deleted.

Corresponding to the foregoing embodiments of the method of information query, the present disclosure further provides embodiments of an apparatus for information query.

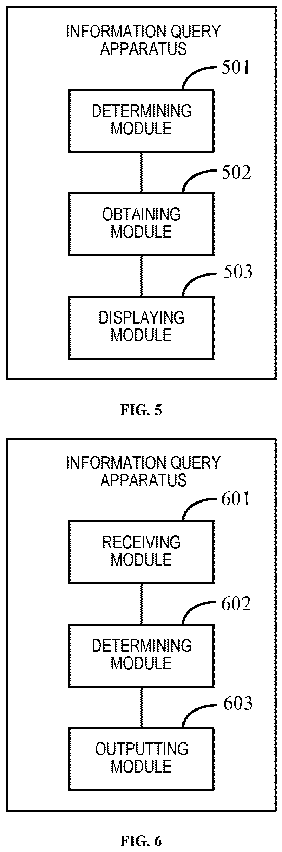

As shown in FIG. 5, this figure is a block diagram of an apparatus for information query according to an example embodiment of the present disclosure. The apparatus may include: a determining module 501, an obtaining module 502 and a displaying module 503.

The determining module 501 is configured to determine a first information set having an association relationship with a first session in response to an information query request triggered by a first user in the first session, wherein the first user is a session member of the first session, and the first information set includes information outside the first session.

The obtaining module 502 is configured to obtain a query result from the first information set according to the information query request.

The displaying module 503 is configured to display the query result in the first session.

In some implementations, the preset information query request includes a session message including a preset character sent in the first session. Alternatively, a preset control is triggered in the first session, and the information query request is input in a page associated with the preset control.

In other implementations, the first information set belongs to a target information set, the target information set further including a second information set corresponding to a second session, and the first information set being different from the second information set.

In other implementations, the target information set further includes configuration information, and the configuration information may include a correspondence relationship between a session and an information set in the target information set.

In other implementations, the configuration information may further include one or more of: configuration information of whether a query result corresponding to a session is forwardable, and configuration information of a visible range of a query result corresponding to a session.

In other implementations, the determining module 501 is configured to, in response to the first user sending an information query message referring to a first application in the first session, determine a target information set associated with the first application, and take all or part of the target information set associated with the first application as the first information set.

In other implementations, the first application is a chat robot. The displaying module 503 is configured to send a session message including the query result in the first session through the chat robot.

In other implementations, the target information set associated with the first application is a first online data table. The first information set is at least part of sub-tables in the first online data table, or the first information set is information in at least part of rows or columns of at least part of sub-tables in the first online data table.

In other implementations, the apparatus may further include: an establishing module and a releasing module (not shown in the figure).

The establishing module is configured to establish an association relationship between the first information set and the first session in response to an operation of adding the first application program to the first session.

The releasing module is configured to release the association relationship between the first information set and the first session in response to an operation of removing the first application from the first session.

In other implementations, the displaying module 503 is configured to display the query result to all session members of the first session; or display the query result to part of session members of the first session, wherein the part of session members include the first user and at least one other user; or display the query result to the first user.

In other implementations, the determining module 501 is configured to: determine a first online data table associated with the preset information query request, and judge whether the first online data table enables a preset permission; in response to the preset permission being enabled, obtain a target identifier including an identifier of a first user and an identifier of the first session, and search for a sub-table corresponding to the target identifier from the first online data table as the first information set; and in response to the preset permission being not enabled, obtain permission configuration information of the first session, and determine, based on the permission configuration information, a sub-table corresponding to the first session in the first online data table as the first information set.

As shown in FIG. 6, this figure is a block diagram of an apparatus for information query according to an example embodiment of the present disclosure. The apparatus may include: a receiving module 601, a determining module 602 and an outputting module 603.

The receiving module 601 is configured to receive a first query request from a first query interface, the first query interface being associated with a first online data table.

The determining module 602 is configured to determine a first query range in the first online data table based on the first query request, the first query range being different from or identical to a second query range, the second query range being a visible range of the first online data table to a user sending the first query request.

The outputting module 603 is configured to obtain a query result from the first query range, and output the query result to the first query interface.

In other implementations, the first query interface is located in a first session, and the first query request includes a session identifier of the first session. The determining module 602 is configured to determine the first query range through content in a configuration sub-table in the first online data table, wherein the configuration sub-table stores a correspondence relationship between a session identifier and a query range.

In other implementations, the first query interface being located in the first session includes: the first query interface being a first chat robot, and the first chat robot being added as a session member of the first session.

In other implementations, the first query interface is located in a first page, and the first query request includes a user identifier of a user inputting the first query request in the first page. The determining module 602 is configured to determine the first query range through content in a configuration sub-table in the first online data table, wherein the configuration sub-table stores a correspondence relationship between a user identifier and a query range.

For the apparatus embodiments, since they basically correspond to the method embodiments, for the relevant parts, reference may be made to the partial description of the method embodiments. The apparatus embodiments described above are merely example, where the units described as separate parts may or may not be physically separate, and parts displayed as units may or may not be physical units, may be located in one position, or may be distributed on a plurality of network units. Some or all of the modules may be selected according to actual needs to achieve the objectives of the embodiments of the present disclosure. Those of ordinary skill in the art may understand and implement the present disclosure without creative efforts.

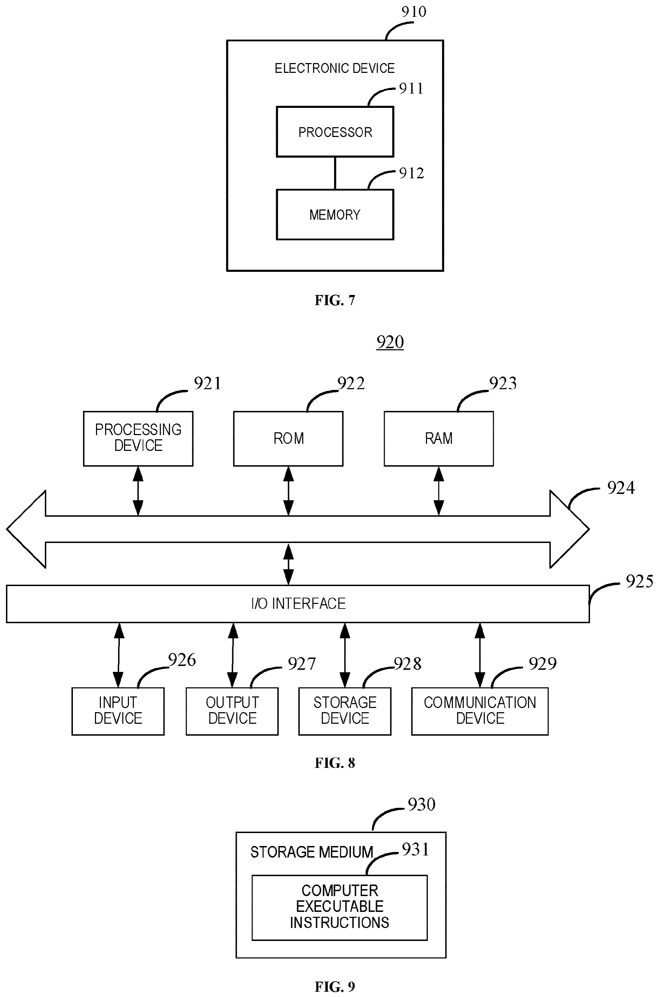

FIG. 7 is a schematic block diagram of an electronic device according to some embodiments of the present invention. As shown in FIG. 7, the electronic device 910 includes a processor 911 and a memory 912, which may be configured to implement a client or a server. The memory 912 is for non-transitory storage of computer-executable instructions (e.g., one or more computer program modules). The processor 911 is configured to run the computer executable instructions which, when by the processor 911, may perform one or more steps of the method of information query described above, thereby implementing the method of information query described above. The memory 912 and the processor 911 may be interconnected via a bus system and/or other form of connection mechanism (not shown).

For example, the processor 911 may be, for example, a central processing unit (CPU), a graphics processing unit (GPU), or other form of processing unit having data processing capabilities and/or program execution capabilities. For example, a central processing unit (CPU) may be an x86 or ARM architecture, etc. The processor 911 may be a general purpose processor or a specialized processor that can control other components in the electronic device 910 to perform desired functions.

For example, the memory 912 may include any combination of one or more computer program products that may include various forms of computer-readable storage media, such as a volatile memory and/or a non-volatile memory. The volatile memory may include, for example, a random access memory (RAM) and/or cache memory, etc. The non-volatile memory may include, for example, a read only memory (ROM), a hard disk, an erasable programmable read only memory (EPROM), a portable compact disc read only memory (CD-ROM), a USB memory, a flash memory, etc. One or more computer program modules may be stored in the computer readable storage medium, and the processor 911 may run the one or more computer program modules to implement various functions of the electronic device 910. The computer readable storage medium may further store various application programs and various data, and various data used and/or generated by the application programs, and the like.

It should be noted that, in the embodiments of the present disclosure, for specific functions and technical effects of the electronic device 910, reference may be made to the foregoing description of the method of information query, and details are not repeated herein.

FIG. 8 is a schematic block diagram of another electronic device according to some embodiments of the present invention. The electronic device 920 is, for example, suitable to implement the method of information query provided in the embodiments of the present invention. The electronic device 920 may be a terminal device or the like, and may be configured to implement a client or a server. The electronic device 920 may include, but is not limited to, a mobile terminal such as a mobile phone, a notebook computer, a digital broadcast receiver, a PDA (Personal Digital Assistant), a PAD (tablet computer), a PMP (Portable Multimedia Player), an onboard terminal (for example, an onboard navigation terminal), a wearable electronic device, and the like, and a fixed terminal such as a digital TV, a desktop computer, a smart home device, and the like. It should be noted that the electronic device 920 shown in FIG. 8 is merely an example, which does not impose any limitation on the function and use scope of the embodiments of the present disclosure.

As shown in FIG. 8, the electronic device 920 may include a processing device (e.g., a central processor, a graphics processor) 921 which is capable of performing various appropriate actions and processes in accordance with programs stored in a read only memory (ROM) 922 or programs loaded from a storage device 928 to a random access memory (RAM) 923. In the RAM 923, there are also stored various programs and data required by the electronic device 920 when operating. The processing device 921, the ROM 922 and the RAM 923 are connected to one another via a bus 924. An input/output (I/O) interface 925 is also connected to the bus 924.

Usually, the following units may be connected to the I/O interface 925: an input device 926 including a touch screen, a touch pad, a keyboard, a mouse, a camera, a microphone, an accelerometers, a gyroscope, or the like; an output device 927, such as a liquid-crystal display (LCD), a loudspeaker, a vibrator, or the like; a storage device 928, such as a magnetic tape, a hard disk or the like; and a communication device 929. The communication device 929 allows the electronic device to perform wireless or wired communication with other device so as to exchange data with other device. While FIG. 8 shows the electronic device 920 with various units, it should be understood that it is not required to implement or have all of the illustrated units. Alternatively, more or less units may be implemented or exist.

Specifically, according to the embodiments of the present disclosure, the method of information query may be implemented as computer software programs. For example, the embodiments of the present disclosure include a computer program product that includes a computer program embodied on a non-transitory computer-readable medium, the computer program including program codes for executing the method of information query. In such an embodiment, the computer program may be loaded and installed from a network via the communication device 929, or installed from the storage device 928, or installed from the ROM 922. The computer program, when executed by the processing device 921, perform the above functions defined in the method of information query of the embodiments of the present disclosure.

FIG. 9 is a schematic diagram of a storage medium according to some embodiments of the present disclosure. For example, as shown in FIG. 9, the storage medium 930 may be a non-transitory computer readable storage medium, configured to store non-transitory computer executable instructions 931. When executed by a processor, the non-transitory computer-executable instructions 931 may implement the method of information query described in the embodiments of the present disclosure. For example, when executed by a processor, the non-transitory computer-executable instructions 931 may perform one or more steps of the method of information query described above.

For example, the storage medium 930 may be applied to the foregoing electronic device, and for example, the storage medium 930 may include a memory in the electronic device.

For example, the storage medium may include a memory card of a smartphone, a storage component of a tablet computer, a hard disk of a personal computer, a random access memory (RAM), a read-only memory (ROM), an erasable programmable read-only memory (EPROM), a portable compact disc read-only memory (CD-ROM), a flash memory, or any combination of the foregoing storage media, and may also be another applicable storage medium.

For example, for description of the storage medium 930, reference may be made to the description of the memory in the embodiment of the electronic device, and details are not repeated herein. For specific functions and technical effects of the storage medium 930, reference may be made to the foregoing description about the method of information query, and details are not repeated herein.

It is noteworthy that the computer readable medium of the present disclosure can be a computer readable signal medium, a computer readable storage medium or any combination thereof. The computer readable storage medium may be, for example, but is not limited to, an electronic, magnetic, optical, electromagnetic, infrared or semiconductor system, apparatus or device, or any combination of the foregoing. More specific examples of the computer readable storage medium may include, without limitation to, the following: an electrical connection with one or more conductors, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer readable storage medium may be any tangible medium including or storing a program which may be used by an instruction executing system, apparatus or device or used in conjunction therewith. In the present disclosure, the computer readable signal medium may include a data signal propagated in baseband or as part of a carrier wave, with computer readable program code carried therein. The data signal propagated as such may take various forms, including without limitation to, an electromagnetic signal, an optical signal or any suitable combination of the foregoing. The computer readable signal medium may further be any other computer readable medium than the computer readable storage medium, which computer readable signal medium may send, propagate or transmit a program used by an instruction executing system, apparatus or device or used in conjunction with the foregoing. The program code included in the computer readable medium may be transmitted using any suitable medium, including without limitation to, an electrical wire, an optical fiber cable, RF (radio frequency), etc., or any suitable combination of the foregoing.

Other implementation solutions of the disclosure will be readily apparent to those skilled in the art in consideration of the description and practice of the invention disclosed herein. This disclosure is intended to cover any variations, uses, or adaptations of the disclosure following the general principles of the disclosure and including common knowledge or customary technical means in the art to which this disclosure does not disclose. It is intended that the specification and embodiments be considered as example only, with true scope and spirit of the disclosure being indicated by the following claims.

It should be understood that the present disclosure is not limited to the precise structures which have been described above and shown in the accompanying drawings, and that various modifications and changes may be made without departing from the scope thereof. The scope of the present disclosure is limited only by the appended claims.

## Claims

1. A method of information query, comprising:
determining a first information set having an association relationship with a first session in response to an information query request triggered by a first user in the first session, wherein the first user is a session member of the first session, and the first information set comprises information outside the first session;
obtaining a query result from the first information set according to the information query request; and
displaying the query result in the first session.

2. The method of claim 1, wherein the information query request comprises:
a session message including a preset character sent in the first session; or
an information query request input in a page associated with a preset control, wherein the page associated with the preset control is a page outputted after triggering the preset control in the first session.

3. The method of claim 1, wherein
the first information set belongs to a target information set, the target information set further comprising a second information set corresponding to a second session, and the first information set being different from the second information set.

4. The method of claim 3, wherein
the target information set further comprises configuration information;
the configuration information comprises a correspondence relationship between a session and an information set in the target information set.

5. The method of claim 4, wherein the configuration information further comprises one or more of:
configuration information of whether a query result corresponding to a session is forwardable; and
configuration information of a visible range of a query result corresponding to a session.

6. The method of claim 1, wherein the determining a first information set having an association relationship with a first session in response to an information query request triggered by a first user in the first session comprises:
in response to the first user sending an information query message referring to a first application in the first session, determining a target information set associated with the first application, and taking all or part of the target information set associated with the first application as the first information set.

7. The method of claim 6, wherein the first application is a chat robot;
the displaying the query result in the first session comprises: sending a session message including the query result in the first session through the chat robot.

8. The method of claim 6, wherein,
the target information set associated with the first application is a first online data table;
the first information set is at least part of sub-tables in the first online data table, or the first information set is information in at least part of rows or columns of at least part of sub-tables in the first online data table.

9. The method of claim 6 or 7, wherein the method further comprises:
establishing an association relationship between the first information set and the first session in response to an operation of adding the first application to the first session; and
releasing the association relationship between the first information set and the first session in response to an operation of removing the first application from the first session.

10. The method of claim 1, wherein the displaying the query result in the first session comprises:
displaying the query result to all session members of the first session; or
displaying the query result to part of session members of the first session, wherein the part of session members comprises the first user and at least one other user; or
displaying the query result to the first user.

11. The method of claim 1, wherein the determining a first information set having an association relationship with a first session in response to an information query request triggered by a first user in the first session comprises:
determining a first online data table associated with the information query request, and judging whether the first online data table enables a preset permission;
in response to the preset permission being enabled, obtaining a target identifier comprising an identifier of a first user and an identifier of the first session, and searching for a sub-table corresponding to the target identifier from the first online data table as the first information set; and
in response to the preset permission being not enabled, obtaining permission configuration information of the first session, and determining, based on the permission configuration information, a sub-table corresponding to the first session in the first online data table as the first information set.

12. A method of information query, comprising:
Receiving a first query request from a first query interface, the first query interface being associated with a first online data table;
Determining a first query range in the first online data table based on the first query request, the first query range being different from or identical to a second query range, the second query range being a visible range of the first online data table to a user sending the first query request; and
Obtaining a query result from the first query range, and outputting the query result to the first query interface.

13. The method of claim 12, wherein
the first query interface is located in a first session, and the first query request comprises a session identifier of the first session;
the determining a first query range in the first online data table based on the first query request comprises: determining the first query range through content in a configuration sub-table in the first online data table,
wherein the configuration sub-table stores a correspondence relationship between a session identifier and a query range.

14. The method of claim 13, wherein
the first query interface being located in the first session comprises: the first query interface being a first chat robot added as a session member of the first session.

15. The method of claim 12, wherein
the first query interface is located in a first page, and the first query request comprises a user identifier of a user inputting the first query request in the first page;
the determining a first query range in the first online data table based on the first query request comprises: determining the first query range through content in a configuration sub-table in the first online data table;
wherein the configuration sub-table stores a correspondence relationship between a user identifier and a query range.

16. An apparatus for information query, comprising:
a determining module configured to determine a first information set having an association relationship with a first session in response to an information query request triggered by a first user in the first session, wherein the first user is a session member of the first session, and the first information set comprises information outside the first session;
an obtaining module configured to obtain a query result from the first information set according to the information query request; and
a display module configured to display the query result in the first session.

17. An apparatus for information query, comprising:
a receiving module configured to receive a first query request from a first query interface, the first query interface being associated with a first online data table;
a determining module configured to determine a first query range in the first online data table based on the first query request, the first query range being different from or identical to a second query range, the second query range being a visible range of the first online data table to a user sending the first query request; and
an output module configured to obtain a query result from the first query range, and output the query result to the first query interface.

18. A computer-readable storage medium, having a computer program stored thereon, when executed in a computer, the computer program causing the computer to perform a method of any of claims 1 to 15.

19. An electronic device, comprising a memory and a processor, wherein the memory stores executable codes, and the processor, when executing the executable codes, implements a method of any of claims 1 to 15.
